# EUROPEAN PATENT SPECIFICATION

(11) **EP 3 059 481 B1**
(45) Date of publication and mention of the grant of the patent: **28.08.2019**
(21) Application number: 15155428.4
(22) Date of filing: 17.02.2015
(51) Int. Cl.: F16L 9/12, F16L 57/06, B32B 1/08, B32B 27/12, B32B 27/20, B32B 27/32, F16L 11/08

(54) **High pressure pipe and use thereof**
Hochdruckleitungsrohr und Verwendung davon
Tuyau à haute pression et son utilisation

(43) Date of publication of application: 24.08.2016
(73) Proprietor: Pipelife Nederland B.V., 1601 MA Enkhuizen (NL)
(72) Inventor: Dalmolen, Lambertus Gerrit Peter, 1502 GP Zaandam (NL); Sengers, Willem Gerard Frans, 1062 KS Amsterdam (NL)
(74) Representative: Nederlandsch Octrooibureau

(56) References cited:
- EP-A1- 2 502 864
- WO-A1-2013/071449
- DE-U1- 29 713 786
- DE-U1-202008 015 520
- US-A1- 2004 144 440
- US-A1- 2010 218 839

## Description

The invention is related to a high-pressure pipe of high density polyethylene material, comprising an internal lining, an intermediate reinforcement layer and an outer cover layer. Such pipes are generally known and are used for various purposes. The pipes in question are relatively economical having regard to the low-cost polyethylene material. However, said polyethylene material poses restrictions on the possible applications of the pipe.

For instance, the pipes should not be subjected to temperatures above about 60°C, as at such temperatures the polyethylene material thereof would soften up the rings stiffness would be become too low to resist collapse due to the external pressures. Furthermore, the pipes are not fit for certain types of fluids such as hydrocarbons, which contain components, which act as a plasticizer. The polyethylene material of the pipe would also soften up merely as a result of the exposure to such fluids. Moreover swelling of the pipe material would occur. In the end these phenomena would lead to pipe failure.

For certain applications, such as in the offshore oil industry, alternative materials such as polyamide 11 or 12 are applied. Materials of this type are certified for hydrocarbons at elevated temperatures of up to 85°C. However, the cost of such pipes is prohibitive for most onshore applications in relation to the transport of hydrocarbons.

A number of pipes use polyethylene, including those described in US2004/144440, WO2013/071449, DE202008015520, EP2502864, DE29713786 and US2010/218839. US2004/144440 describes a flexible, fiber reinforced pipe for conveying fluids, which includes an inner tubular liner having an inner surface and an outer surface; a first layer of reinforcing fibers helically wrapped about the inner liner and in direct contact therewith; an outer layer of reinforcing fibers helically wrapped about an underlying layer of reinforcing fibers and in direct contact therewith; and an outer tubular sheath applied over the outer layer in direct contact therewith. WO2013/071449 describes a flexible pipe that includes: an inner liner formed as a tube and having an outer surface and an inner surface defining an inner diameter; a reinforcement layer bonded to the inner liner and including at least a first ply of reinforcing tape helically wrapped in a first helical direction about the inner liner and a second ply of reinforcing tape helically wrapped about the first ply of reinforcing tape, the second ply of reinforcing tape helically wrapped in a second helical direction opposite to the first helical direction; and an outer jacket applied over and bonded to the reinforcement layer, the outer jacket including a thermoplastic. A reinforcing tape is also described for use in the pipe or other applications including: a plurality of reinforcing fibers and a matrix about the plurality of reinforcing fibers to hold the reinforcing fibers in the form of a tape, the matrix including thermoplastic and an additive to increase the impact resistance of the thermoplastic. DE202008015520 describes a plastic pipe, in particular for receiving indentations such as cables, optical waveguides, pipes, fibers and the like, or for transporting fluids, with an outer layer forming an outer base tube and with a profiled inner layer forming the inner tube surface. Reinforcing fibers, inorganic fillers or nanofillers may be added to layers to improve mechanical properties. EP2502864 describes a method for handling a fiber reinforced tube, the tubular wall of which has a stiffness which allows the tube to maintain a nominal circular cross section of its own, said tube comprising a liner, a fiber reinforcement surrounding the liner and a coating surrounding the fiber reinforcement, the method comprises the steps of: - flattening the tube so as to obtain a non-circular shape, such as an oval or elliptical shape, and subsequently winding the flattened tube onto a reel. By means of the method, a combination of a wound flattened tube and a reel is obtained which is fit for road transport. DE29713786 describes a tube of thermoplastic material with at least two interconnected tube layers, wherein the outer tube as a supporting tube layer is coated at least on its inner periphery with a thin inner layer and wherein the outer tube and the inner layer of thermoplastics of different properties are co-extruded. US2010/218839 describes a high temperature flexible pipe with an inner tubular layer formed of a high temperature thermoplastic, a first reinforcing layer, a second reinforcing layer and an outer sheath.

Nevertheless, as polyethylene is inert with respect to the components of hydrocarbons, it would still be desirable to use this material for these applications. An object of the invention is therefore to provide an improved high-pressure pipe of high density polyethylene. A further object is to provide a high-pressure pipe of high density polyethylene which has a better resistance against softening up and swelling under the influence of hydrocarbons. Another object is to provide a high-pressure pipe of high density polyethylene which is better resistant against elevated temperatures of up to 85°C. Yet another object is to provide a high-pressure pipe of high density polyethylene which is able to resist internal pressures of up to 250 bar.

These and other objects are achieved in that the high-density polyethylene material of the internal lining is filled with a filling material according to claim 1. It appears that the mixture of high-density polyethylene and filling material provides a higher modulus of elasticity of the polyethylene material whereby the resistance against collapse due to external pressure and the resistance to high temperatures is increased. Moreover, it appears that such mixture of a polyethylene material with a filler material is less prone to swelling and softening up under the influence of hydrocarbons.

It is pointed out that the application of filling material, such as talcum, in high-density polyethylene pipes is well-known per se. In such prior art pipes, the pipe wall over its full thickness consist of polyethylene material which is filled filling material, The filling itself is of low-cost material which merely serves to reduce the amount of polyethylene used. In contrast, the high-pressure pipe according to the invention comprises several layers including a reinforcement layer. The internal lining of this pipe consist of high density polyethylene material, while the filler material acts to counter the effects of swelling and softening up in contact with hydrocarbons, as well as the effects of elevated temperatures.

The filling material comprises a mineral, e.g. talcum or mica. According to the invention, the filling material comprises nanoparticles. The nanoparticles of the filler material may have several shapes. According to a first possibility, the nanoparticles are platelets or are plate-shaped. Preferably, such plate-shaped particles are arranged in overlapping fashion, e.g. according to a roof-tile arrangement. Thereby, the particles are able to transfer forces which may be generated in the inner layer under the influence of external and internal loads. Thus, the pipe is able to withstand relatively high loadings, and at the same time the influence of the plasticizing effect of the fluid which is being transported is mitigated. Alternatively, the nanoparticles are fiber-shaped or rod-shaped. Preferably, the ratio of the weight of the filling material over the total internal lining weight is comprised in the range of 1% to 20 % of the lining pipe.

The reinforcement layer may comprise fibers, preferably fibers which are arranged according to angles of +54° and -54° with respect to the longitudinal pipe axis.

The invention is furthermore related to the use of a high pressure pipe of high density polyethylene as described before for transporting a fluid having a temperature in the range of 50°C-100°C. Preferably, the pipe is used for transporting fluids at a temperature of at least 60°C, more preferably of at least 70°C. Furthermore, the invention is related to the use of a high pressure pipe of high density polyethylene as described before for transporting a fluid at a pressure in the range of 20-500 bar, in particular for transporting hydrocarbons. Preferably, the pressure is at least 100 bar.

The invention will be described further with respect to the embodiment shown in the drawings.
Figure 1 shows a cross-section of the pipe.
Figure 2 shows a view in perspective of the pipe, with partly removed layers.
Figure 3 shows an enlarged detail.

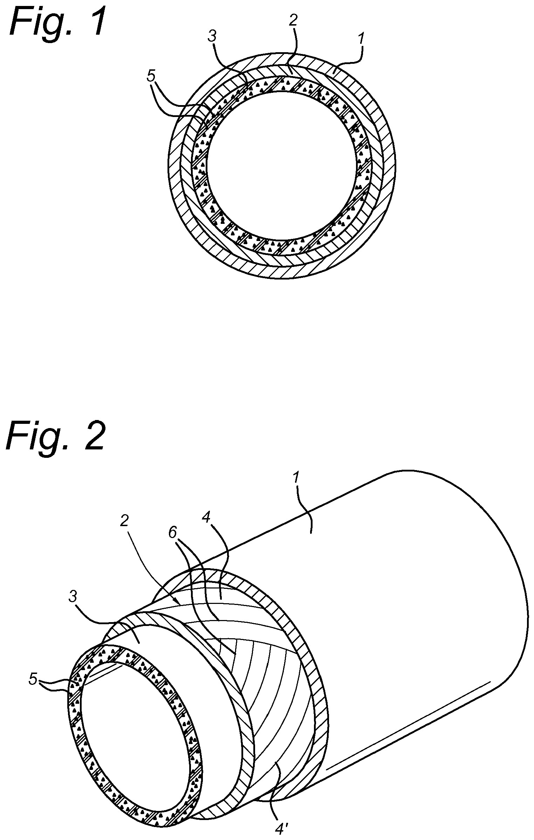

The pipe shown in cross-section in figure 1 consists of an outer coating layer 1, an intermediate reinforcement layer 2 and an internal lining 3. The internal lining layer comprises a high-density polyethylene material. The reinforcement layer comprises fibre layers 4, 4' each having parallel fibres. The fibres 6 of the one fibre layer 4 are preferably oriented at 54° with respect to the longitudinal axis of the pipe, the fibres 6 of the other fibre layer 4'are preferably oriented at -54°. This orientation is shown in the view of figure 2.

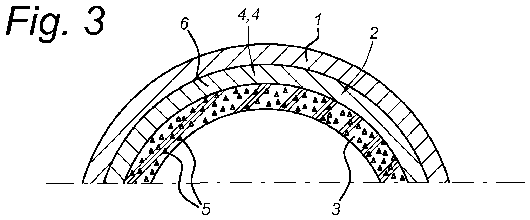

In the enlarged cross-sectional detail of the pipe wall as shown in figure 3, the polyethylene material of the internal lining 3 is filled with a filling material 5 of particles. This filling material consists of a mineral, such as talcum or mica platelets, or rods. The filling material 5 also consists of nanoparticles. The filling material increases the modulus of elasticity of the internal lining 3, and increases the resistance thereof against swelling in case hydrocarbons are transported through the pipe in question. As a result of the increased stiffness of the lining, the pipe is fit for transporting fluids at relatively high pressures and temperatures. Moreover, the use of filler materials decreases the plasticizing effect of hydrocarbons on the lining 3.

Thus, a pipe is obtained at a relatively low cost due to the application of high density polyethylene material for the internal lining, which at the same time is fit for transporting aggressive fluids such as hydrocarbons at elevated temperatures and pressures due to the filling in the high density polyethylene lining material.

### List of reference numerals

- 1.: Coating layer
- 2.: Reinforcement layer
- 3.: Lining
- 4, 4': Reinforcement fiber layer
- 5.: Filling material
- 6.: Fibre

## Claims

1. High pressure pipe of high density polyethylene material, comprising an internal lining (3), an intermediate reinforcement layer (2) and an outer cover layer (1), wherein the high density polyethylene material of the internal lining (3) is filled with a filling material (5) which results in the pipe being able to transport fluids at elevated temperatures, wherein the filling material (5) comprises a mineral, wherein the filling material (5) comprises nanoparticles, wherein the filling material nanoparticles are platelets or are plate-shaped or are fiber-shaped or rod-shaped, and wherein the aspect ratio of the nanoparticles is at least an order of magnitude more than 1.

2. Pipe according to claim 1, wherein the mineral is talcum.

3. Pipe according to claim 1-2, wherein the plate-shaped nanoparticles are arranged in overlapping fashion, e.g. according to a roof-tile arrangement.

4. Pipe according to any of the preceding claims, wherein the aspect ratio of the nanoparticles is at least three orders of magnitude larger than 1.

5. Pipe according to any of the preceding claims, wherein the reinforcement layer (2) comprises fibers (6), preferably fibers which are arranged according to angles of +54 and -54 degrees with respect to the longitudinal pipe axis.

6. Pipe according to any of the preceding claims, wherein the weight of the filling material (5) over the total internal lining weight is comprised in the range of 1% to 20% of the pipe weight.

7. Use of a high pressure pipe of high density polyethylene according to any of the preceding claims for transporting a fluid having a temperature in the range of 50°C-100°C.

8. Use of a high pressure pipe of high density polyethylene according to any of the preceding claims 1-6 for transporting a fluid having a temperature of at least 60°C, more preferably of at least 65°C.

9. Use of a high pressure pipe of high density polyethylene according to any of claims 1-6 for transporting a fluid at a pressure in the range of 20-500 bar.

10. Use according to any of claims 7-9 for transporting hydrocarbons.

11. Pipe according to any of claims 1-6, wherein the filling material increases the modulus of elasticity of the internal lining.

12. Pipe according to any of claims 1-6, wherein the elevated temperatures are at least 60°C.

## Patentansprüche

1. Hochdruckrohr aus hochdichtem Polyethylenmaterial, umfassend eine Innenauskleidung (3), eine dazwischenliegende Verstärkungsschicht (2) und eine äußere Deckschicht (1), wobei das hochdichte Polyethylenmaterial der Innenauskleidung (3) mit einem Füllmaterial (5) befüllt ist, was dazu führt, dass das Rohr Fluide bei erhöhten Temperaturen transportieren kann, wobei das Füllmaterial (5) ein Mineral umfasst, wobei das Füllmaterial (5) Nanopartikel umfasst, wobei die Füllmaterialnanopartikel Plättchen sind oder plattenförmig sind oder faserförmig oder stabförmig sind, und wobei das Seitenverhältnis von den Nanopartikeln zumindest eine Größenordnung von mehr als 1 ist.

2. Rohr nach Anspruch 1, wobei das Mineral Talkum umfasst.

3. Rohr nach Anspruch 1-2, wobei die plattenförmigen Nanopartikel überlappend, z.B. nach einer Dachziegelanordnung, angeordnet sind.

4. Rohr nach einem der vorstehenden Ansprüche, wobei das Seitenverhältnis von den Nanopartikeln zumindest drei Größenordnungen größer als 1 ist.

5. Rohr nach einem der vorstehenden Ansprüche, wobei die Verstärkungsschicht (2) Fasern (6), umfasst, bevorzugt Fasern, die in Winkeln von +54 und -54 Grad in Bezug auf die Rohrlängsachse angeordnet sind.

6. Rohr nach einem der vorstehenden Ansprüche, wobei das Gewicht des Füllmaterials (5) über das gesamte Innenauskleidungsgewicht im Bereich von 1% bis 20% des Rohrgewichts liegt.

7. Verwendung eines Hochdruckrohrs aus hochdichtem Polyethylen nach einem der vorhergehenden Ansprüche zum Transportieren eines Fluids mit einer Temperatur im Bereich von 50°C-100°C.

8. Verwendung eines Hochdruckrohrs aus hochdichtem Polyethylen nach einem der vorstehenden Ansprüche 1-6 zum Transportieren eines Fluids mit einer Temperatur von zumindest 60°C, stärker bevorzugt von zumindest 65°C.

9. Verwendung eines Hochdruckrohrs aus hochdichtem Polyethylen nach einem der Ansprüche 1-6 zum Transportieren eines Fluids bei einem Druck im Bereich von 20-500 bar.

10. Verwendung nach einem der Ansprüche 7-9 zum Transportieren von Kohlenwasserstoffen.

11. Rohr nach einem der Ansprüche 1-6, wobei das Füllmaterial den Elastizitätsmodul der Innenauskleidung erhöht.

12. Rohr nach einem der Ansprüche 1-6, wobei die erhöhten Temperaturen zumindest 60°C betragen.

## Revendications

1. Tuyau à haute pression en matériau polyéthylène à haute densité, comprenant une garniture intérieure (3), une couche de renforcement intermédiaire (2) et une couche de recouvrement extérieur (1), dans lequel le matériau polyéthylène à haute densité de la garniture intérieure (3) est rempli d'un matériau de remplissage (5) permettant au tuyau de transporter des fluides à des températures élevées, dans lequel le matériau de remplissage (5) comprend une matière minérale, dans lequel le matériau de remplissage (5) comprend des nanoparticules, dans lequel les nanoparticules du matériau de remplissage sont des plaquettes ou sont en forme de plaque ou sont en forme de fibre ou de tige, et dans lequel le facteur de forme des nanoparticules est d'au moins un ordre de grandeur supérieur à 1.

2. Tuyau selon la revendication 1, dans lequel la matière minérale est du talc.

3. Tuyau selon la revendication 1 ou 2, dans lequel les nanoparticules en forme de plaque sont disposées de manière à se chevaucher, par exemple conformément à un agencement de tuiles de toit.

4. Tuyau selon l'une quelconque des revendications précédentes, dans lequel le facteur de forme des nanoparticules est d'au moins trois ordres de grandeur supérieur à 1.

5. Tuyau selon l'une quelconque des revendications précédentes, dans lequel la couche de renforcement (2) comprend des fibres (6), de préférence des fibres qui sont disposées selon des angles de +54 et -54 degrés par rapport à l'axe longitudinal du tuyau.

6. Tuyau selon l'une quelconque des revendications précédentes, dans lequel le poids du matériau de remplissage (5) par rapport au poids total de la garniture intérieure est dans la gamme allant de 1 % à 20 % du poids du tuyau.

7. Utilisation d'un tuyau à haute pression en polyéthylène à haute densité selon l'une quelconque des revendications précédentes, pour transporter un fluide ayant une température dans la gamme allant de 50 °C à 100 °C.

8. Utilisation d'un tuyau à haute pression en polyéthylène à haute densité selon l'une quelconque des revendications précédentes 1 à 6, pour transporter un fluide ayant une température d'au moins 60 °C, plus préférablement d'au moins 65 °C.

9. Utilisation d'un tuyau à haute pression en polyéthylène à haute densité selon l'une quelconque des revendications 1 à 6, pour le transport d'un fluide à une pression dans la gamme allant de 20 à 500 bars.

10. Utilisation selon l'une quelconque des revendications 7 à 9, pour le transport d'hydrocarbures.

11. Tuyau selon l'une quelconque des revendications 1 à 6, dans lequel le matériau de remplissage augmente le module d'élasticité de la garniture intérieure.

12. Tuyau selon l'une quelconque des revendications 1 à 6, dans lequel les températures élevées sont d'au moins 60 °C.
